# EUROPEAN PATENT SPECIFICATION

(11) **EP 3 274 145 B1**
(45) Date of publication and mention of the grant of the patent: **22.03.2023**
(21) Application number: 16769194.8
(22) Date of filing: 22.01.2016
(51) Int. Cl.: B29C 33/44, B29C 33/38, B33Y 80/00, B29L 31/00, B29C 37/00

(54) **PROCESSES FOR MANUFACTURING PARTS EMPLOYING ADDITIVE MANUFACTURING**
VERFAHREN ZUR HERSTELLUNG VON TEILEN MITTELS GENERATIVER FERTIGUNG
PROCÉDÉS DE FABRICATION DE PIÈCES EMPLOYANT UNE FABRICATION ADDITIVE

(30) Priority: 25.03.2015 US 201562138188 P
(43) Date of publication of application: 31.01.2018
(73) Proprietor: Sikorsky Aircraft Corporation, Stratford, CT 06615 (US)
(72) Inventor: BREMMER, Jonathan, Kennesaw, GA 30152 (US); TONI, Darryl Mark, Clinton, Connecticut 06413 (US); SAUER, Jeffrey G., Woodbury, Connecticut 06798 (US); LACKO, Robert A., Oxford, Connecticut 06478 (US); PRIETO, Juan J., Jr., Stratford, Connecticut 06615 (US); FOTI, Christopher John, Waterbury, Connecticut 06708 (US)
(74) Representative: Schmitt-Nilson Schraud Waibel Wohlfrom Patentanwälte Partnerschaft mbB
(86) International application number: PCT/US2016/014496
(87) International publication number: WO 2016/153588

(56) References cited:
- US-A- 5 076 871
- US-A1- 2009 014 919
- US-A1- 2010 314 794
- US-A1- 2010 314 794
- US-A1- 2011 308 711
- US-A1- 2012 232 857
- US-A1- 2014 222 184
- US-A1- 2014 330 367

## Description

### FEDERAL RESEARCH STATEMENT

This invention was made with government support with the United States Navy under Contract No. N00019-06-C-0081. The government therefore has certain rights in this invention.

### BACKGROUND OF THE INVENTION

Embodiments herein generally relate to additive manufacturing for part or component fabrication, and specifically to tools and processes for manufacturing and fabricating parts or components using additive manufacturing techniques.

Various specialized and/or custom tools and parts are required to manufacture or perform service, maintenance, and/or repair operations on consumer, commercial, and industrial equipment, such as aircraft, oil rigs, vehicles, etc., hereinafter "equipment." Because of the size, geometry, nature, configurations, or other factors of the equipment, special tooling and manufacturing processes and procedures may be required to fabricate parts of or replacement/repair parts for the equipment. For example, certain parts of the equipment may require unique and/or complex geometries to enable proper fitting together and/or operation of the equipment.

One method of manufacturing these parts and components is by machining or similar techniques. The parts and components may be tooling, such as molds, mandrels, or other types of lay-up devices that can be used with part fabrication. The tooling required for composite prepreg part fabrication may be expensive and may require long lead times. The materials needed for tooling may require temperature resistance to thermal cure temperatures and pressures. Thus, materials may be aluminum, invar, steel, and/or composites, with the material requiring machining or other manufacturing. To form unique or complex geometries, the processes may be expensive, and may have long durations, and the end product (the tooling) may only be usable for a single specific purpose, i.e., serving as a mold for one specific part or component.

US 2012/0232857 A1 discloses a computer-implemented method for creating a customized CAD model of a casting mold, defined as the casting mold CAD model, for molding of a personalized device, where the casting mold is used for casting an at least partly soft mold as part of the personalized device, and where the casting mold is adapted to be manufactured by rapid prototyping, such as 3D printing, including: acquiring an input 3D model representing the personalized device, where the input 3D model is acquired by 3D scanning, generating the casting mold CAD model as an impression of at least a part of the input 3D model, the casting mold CAD model thereby including the negative geometry of the personalized device, and defining at least one sectioning of the casting mold CAD model by means of at least one separation plane and/or separation spline.

US 20103/014794 A1 discloses a method and apparatus may be present for manufacturing. A shell may be formed having a support structure located in a cavity in which the shell and the support structure may be formed using an additive manufacturing system from a design of a tool. The cavity of the shell may be filled with a filler material through an opening in the shell. The shell may be cured with the filler material to form the tool.

US 2011/0308711 A1 discloses a system and method for forming a hollow, complex, monolithic composite part. Composite material may be placed around the mandrel, then an internal impermeable membrane may be placed into and/or through tunnels formed in the mandrel. Next, an external impermeable membrane may be placed around the composite material and sealed against itself and the internal impermeable membrane such that the mandrel and the composite material are both contained in an airtight manner between the internal and external impermeable membranes. Air may then be removed from within the sealed impermeable membranes, compressing the impermeable membranes against the mandrel and/or the composite material. The consolidated composite material may be hardened to form the composite part. Finally, the impermeable membrane may be removed from around the hollow composite part and from within the mandrel, followed by removal of the mandrel from within the composite part by breaking it up into smaller pieces.

US 5,076,871 A1 discloses a method of forming composite prepreg articles. Prepreg plies (12) are laid up over a breakable mandrel (10), the mandrel having a configuration substantially matching the desired configuration of the composite prepreg article and being pre-coated to prevent the prepreg from sticking to it. A release film (14) is applied over the prepreg. A heat-shrinkable braided sleeve (16) is placed over the prepreg and release film and secured to the mandrel, thereby creating an assembly (28). The prepreg is first compacted by encapsulating the assembly and applying a vacuum, and is then substantially cured by exposing the assembly to heat. After curing, the braided sleeve and release film are removed. The cured prepreg, which serves as the desired composite prepreg article, is separated from the mandrel by breaking the mandrel.

The dependent claims define further embodiments of the invention.

### BRIEF DESCRIPTION OF THE INVENTION

According the invention, a method according to claim 1 is provided. The method includes generating a digital model of a tooling having a complex geometry; additively manufacturing a tooling based on the digital model from tooling material; laying-up fabrication materials on the tooling; curing the fabrication materials on the tooling to form a fabricated part; and removing the tooling from the fabricated part, which is an aircraft, oil rig, or vehicle part. The step of removing the tooling from the fabricated part comprises breaking the tooling.

Further embodiments may include recycling the tooling material for reuse.

Further embodiments may include, wherein the tooling includes one or more support features.

Further embodiments may include, wherein the tooling materials are configured to maintain a rigid tooling structure during the curing process.

Further embodiments may include adjusting the curing process to optimize the process with respect to material properties of the fabrication materials.

Further embodiments may include, wherein the curing includes curing at a temperature of 200-225 °F (93.3 to 107.2°C) for six hours, raising the temperature to 250 °F (121.1°C) for two hours, and raising the temperature to 350 °F (176.7°C) for two hours.

Further embodiments may include, wherein the tooling material is configured to maintain a rigid tooling structure during a first portion of the curing process and configured to loss the rigidity during a second portion of the curing process.

A tooling configured for forming fabricated parts is provided. The tooling includes a lay-up surface configured to support fabrication materials and configured to enable complex geometries and a support surface configured to provide structural integrity to the lay-up surface. The lay-up surface and the support surface are formed by additive manufacturing such that the complex geometries are formed as part of the tooling. The lay-up surface and the support surface are formed of a material configured to support curing of the fabrication materials to form a fabricated part.

The support surface may include one or more support features.

The curing may include curing at a temperature of 200-225 °F (93.3 to 107.2°C) for six hours, raising the temperature to 250 °F (121.1°C) for two hours, and raising the temperature to 350 °F (176.7°C) for two hours.

The complex geometry may include trapped spaces.

The tooling may further comprise one or more removable supports.

The material of the tooling may be configured to maintain a rigid tooling structure during a first portion of a curing process and configured to loss the rigidity during a second portion of the curing process.

Technical effects of embodiments of the invention include methods of manufacturing fabricated parts with complex geometries. Further technical effects include employing adjustable and/or modifiable cure processes that are configured to take advantage of material properties of both a tooling material and a fabrication material of a fabricated part. Further technical effects include the ability to recycle tooling materials of a tooling for repeated generation of tooling of various geometries, including complex geometries.

### BRIEF DESCRIPTION OF THE DRAWINGS

The subject matter which is regarded as the invention is particularly pointed out and distinctly claimed in the claims at the conclusion of the specification. The foregoing and other features and advantages of the invention are apparent from the following detailed description taken in conjunction with the accompanying drawings in which:
FIG. 1 is a process of manufacturing parts in accordance with an exemplary embodiment of the invention;
FIG. 2A is a schematic of a tooling in accordance with an exemplary embodiment of the invention;
FIG. 2B is an isometric view of the tooling of FIG. 2A;
FIG. 2C is a schematic of a composite part on top of the tooling of FIG. 2A during the manufacturing of the composite part; and
FIG. 2D is a schematic of the composite part of FIG. 2B after removal from the tooling of FIG. 2A.

### DETAILED DESCRIPTION OF THE INVENTION

Embodiments of the invention modify traditional composite processing to allow for low cost, low cycle time, and to enable complex geometry of component and part fabrication. Specifically, in accordance with embodiments of the invention, tooling of complex geometries may be made from additive manufacturing processes, including 3D printing. As used herein, "tooling" is used to refer to support structures, molds, mandrels, tools, call plates, etc. that are configured to be laid-up with fabrication materials and then processed, e.g., cured, to form a part or component based on the tooling. The tooling of the invention is designed using current CAD/CAM software and/or other similar software, applications, etc. and may be manufactured without secondary machining operations. The tooling can incorporate tool breaks, multiple pieces, draft angles for removal, ply locations, end of production (EOP) features, end of manufacturing (EOM) features, etc. Further, the tooling material, as used herein, can be nylon, acrylonitrile butadiene styrene (ABS), polyetherimide (PEI), thermoplastics, or equivalents, including other materials known in the art.

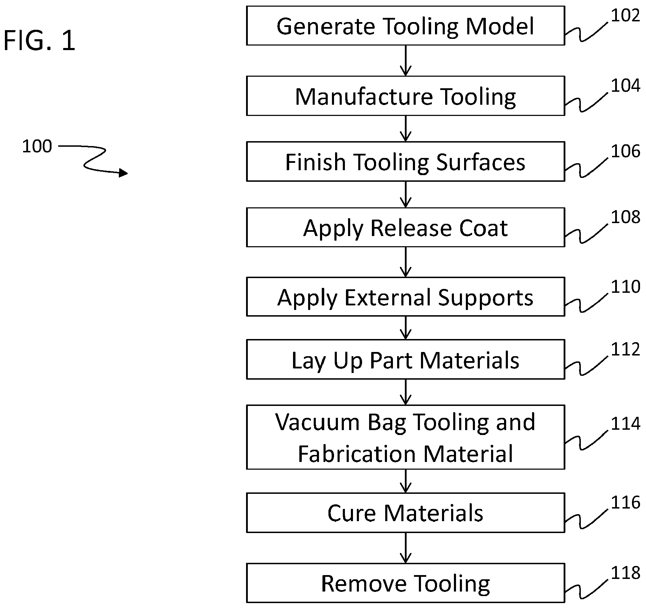

Referring to FIG. 1, a process 100 of manufacturing a fabricated component or part in accordance with an exemplary embodiment of the invention is shown. At step 102 a computer program is used to generate a computer generated model of a tooling or other similar model. The model may be generated using computer-aided design (CAD), computer aided three-dimensional interactive application (CATIA), or other type of modeling applications, software, programs, etc.

The tooling may be a mold or other support structure that will be used to form the shape and dimensions of a component or part for a piece of equipment. As used herein "equipment" means consumer, commercial, and/or industrial equipment, such as aircraft, oil rigs, vehicles, etc., and/or parts thereof. Thus, the tooling may include unique geometries, configurations, sizes, shapes, etc. that will enable the manufactured part to fit within and operate with the equipment.

Because the tooling is designed on a computer, and additive manufacturing processes enable complex geometries, a user can design a very unique part or component to be formed, without the need for complex manufacturing processes and/or the formation of a part from multiple pieces. That is, a single, unitary tooling for a part or component of equipment may be designed at step 102. As noted, the tooling may be pre-designed with breaks, draft angles, ply locations, multiple pieces, end of production features, end of manufacturing features, etc. The complex geometries enabled by the invention may include curves, inverted surfaces, internal cavities, trapped portions, diabolo shapes and configurations, and/or any other complex shape, geometry, or configuration that may be required for the formation of a part or component of equipment. The result or product of step 102 is a digital file or similar digital representation of a tooling.

At step 104, the digital representation of the tooling is sent to or input into an additive manufacturing device, such as a 3D printer, and the tooling will be physically constructed or manufactured by the additive manufacturing device. For example, at step 104, the additive manufacturing device, e.g., a 3D printer, will deposit layers of material, such as plastics, thermoplastics, metals, composites, etc. to build the structure of the tooling. In some embodiments the material may be nylon, acrylonitrile butadiene styrene (ABS), polyetherimide (PEI), thermoplastics, SR-30 soluble support material, terpolymers of methacrylic acid, styrene, and butylacrylate, and/or equivalents thereof. However, these are merely exemplary and those of skill in the art will appreciate that other materials may be used without departing from the scope of the invention.

At step 104, the materials that the additive manufacturer may employ may include specific temperature resistance profiles, thermal cure temperature profiles, pressure profiles, etc. That is, the materials of the tooling ("tooling material") may be selected based on the desired formation of the component or part of the equipment. For example, if a fabricated part must be formed from a particular fabrication material, such as a composite, the tooling may be formed from a tooling material that may withstand the curing temperatures and pressures of the fabrication material.

Because additive manufacturing is employed at step 104, complex geometries may be formed for the tooling, due to the flexibility of computer aided design and additive manufacturing processes. Thus, a single, unitary part can be constructed or formed based on the tooling. This may eliminate the need for the tooling or a fabricated part to be formed from multiple pieces. Further, the tooling may be printed or manufactured in quantity. That is, a plurality of toolings may be formed sequentially and/or simultaneously.

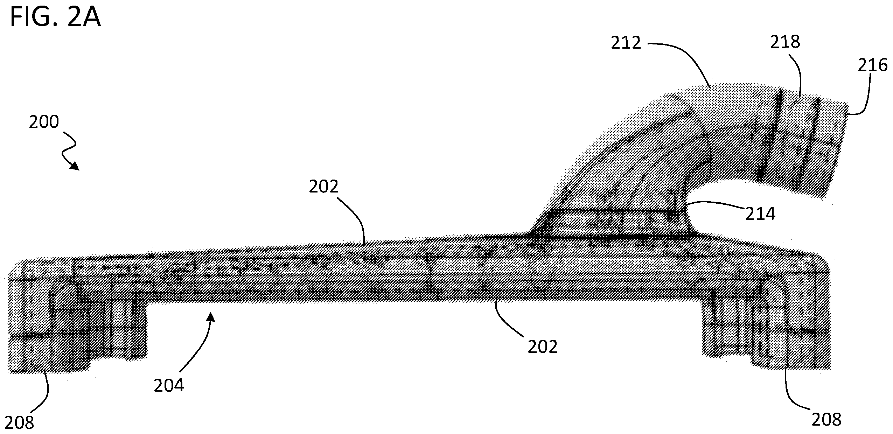

The tooling may be constructed or designed with structural supports built or formed therein. For example, a lay-up surface for the component or part may be smooth and formed for the specific component or part, and the underside of the lay-up surface may be formed with strengthening features, such as stiffening ribs, egg-crating, etc. (see, e.g., FIGS. 2A-2D). Thus, the tooling can be formed with a preferred or desired lay-up surface, but still be sufficiently strong or stiff to withstand handling, lay-up, etc.

Next, at step 106, the lay-up surface of the tooling may be finished, as required. Finishing at step 106 may include smoothing surfaces, removing any extraneous components or parts not necessary for the final fabricated part, sealing any parts of the surfaces of the tooling, etc. In some embodiments, for example, the smoothing may be performed by sanding or other similar applications or processes and the sealing may include the application of an epoxy or equivalents thereof. Those of skill in the art will appreciate that step 106 may be optional.

Next, at step 108, a release coat may be applied to surfaces of the tooling. The release coat of step 108 may be release tapes, coated tapes, waxes, mold release agents, or similar material(s) or products as known in the art. The release coat is configured to improve the ability to remove the tooling from a final manufactured part or component. Those of skill in the art will appreciate that step 108 may be optional.

Next, at step 110, fillers, external supports, etc., may be inserted into the tooling. The external supports are not part of the tooling made in step 104, and may be foams, sand, etc., that are filled or placed at or within specific parts or locations of the tooling. Thus, the external supports may be structures and/or materials, as needed. The external supports are configured to add additional support and rigidity to the tooling. Those of skill in the art will appreciate that step 110 may be optional.

After steps 102-110, i.e., the formation and preparation of the tooling, at step 112 the component or part material(s) are laid-up on the lay-up surfaces of the tooling, hereinafter, these materials will be referred to as "fabrication material(s)." For example, composite prepreg materials for part fabrication may be applied to the surfaces of the tooling that will form the fabricated part. The fabrication materials are the material(s) that will form the fabricated part based on the tooling and may include prepreg or other materials with resin systems, or resins may be applied separately from the fabrication material that will form the fabricated part. As such, various lay-up techniques may be used, as known in the art.

With the fabrication material laid up on the tooling, the fabrication material may be cured at steps 114-116, thus forming a structurally sound and unitary fabricated part. Various curing processes may be employed herein. It will be appreciated that the tooling material will be configured to withstand the curing process of the fabrication material, or at least for a duration of the curing process such that the fabrication material may bond or cure to form a rigid structure that forms the fabricated part.

In accordance with embodiments of the invention, the curing is vacuum bag curing. The curing process is prepared at step 114, wherein the fabrication material as laid-up on the tooling may be inserted into a vacuum bag. After sealing the vacuum bag, air is evacuated therefrom. The vacuum bag will then conform to and compress the fabrication material onto the lay-up surfaces of the tooling during generation of the vacuum within the bag. The entire configuration may then be placed within an oven and a curing process or cycle may be performed at step 116. That is, the laid-up fabrication material may be cured at desired temperatures and pressures within the vacuum bag to manufacture a fabricated part.

An example of a cure process in accordance with an exemplary embodiment of the invention is a cure cycle at vacuum pressures. A first cycle of 200-225 °F (93.3 to 107.2°C) is performed for six hours. Then, the temperature is raised to 250 °F (121.1°C) for two hours, and finally, the temperature is raised again to 350 °F (176.7°C) for two hours. In some embodiments, a slow ramp rate cure cycle may be used to control the temperatures and ramping rates. For example, the temperature may be increased from room temperature (e.g., 70 °F, i.e., 21.1°C) to 350 °F (176.7°C) in 480 minutes, and then curing may occur for 120 minutes under vacuum pressure after 260 °F (126.7°C). In some embodiments, the temperature increase rate may be half a degree F per minute (0.278°C/min). Although described herein with various temperatures, times, durations, cycles, pressures, etc., those of skill in the art will appreciate that the various characteristics of the curing process may be varied, and may depend on the tooling material(s) and/or the fabrication material(s). As such, the invention is not limited to the above described characteristics of the curing process, but rather these are provided for exemplary and illustrative purposes.

After step 116 and the curing process are complete, the tooling may be removed or de-molded at step 118. Because the tooling is additively manufactured, the material that forms the tooling may be recyclable and thus the tooling may be broken apart to remove the tooling. That is, as enabled by embodiments of the invention, the tooling can easily and readily be removed from the fabricated part, even with complex geometries. The tooling is disposable, recyclable, etc. Further, in some embodiments, the tooling may be configured to melt or dissolve away at or near the end of the curing process. In other embodiments, the tooling may shrink or peel away from the fabricated part at a predetermined point during the curing process, thus making removal of the tooling easier.

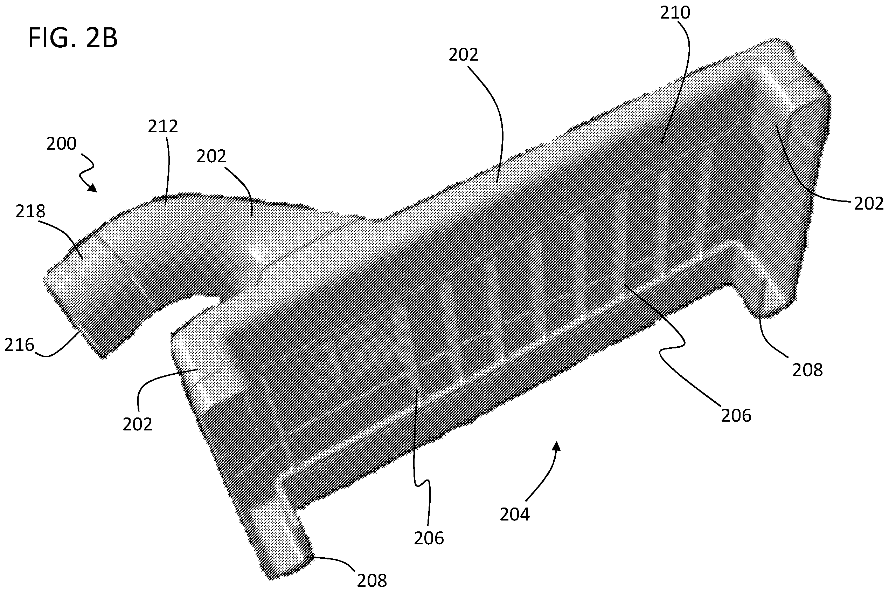

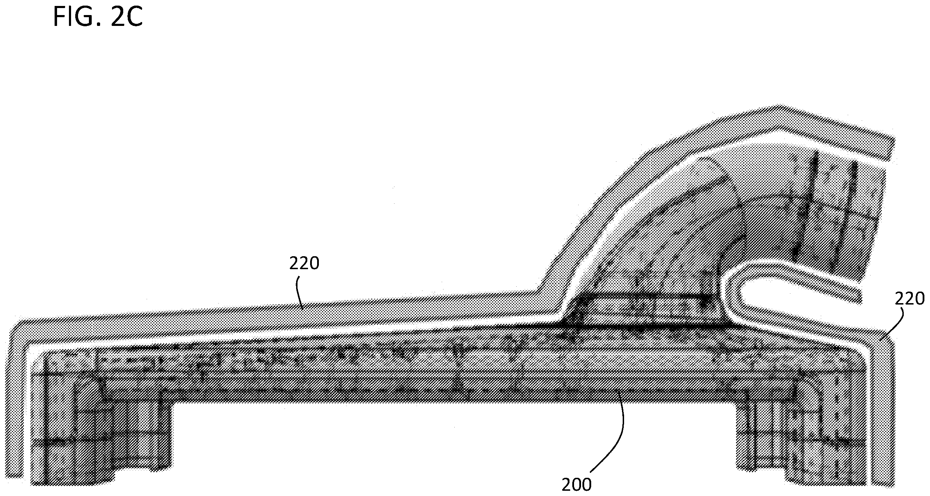

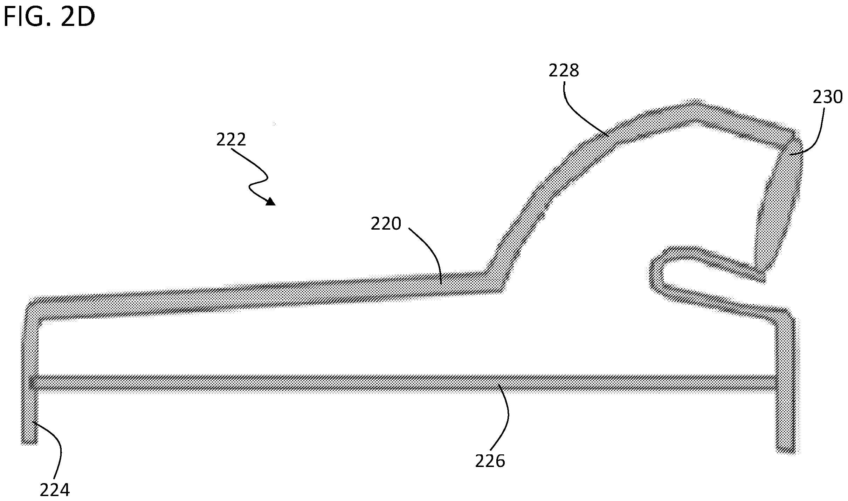

Turning now to FIGS. 2A-2D an exemplary tooling, fabrication, and fabricated part are shown. In FIG. 2A a schematic of a tooling is shown; in FIG. 2B an isometric view of the tooling of FIG. 2A is shown; in FIG. 2C a schematic of fabrication material laid-up on the tooling of FIG. 2A is shown; and in FIG. 2D the fabrication material is shown as a fabricated part with the tooling removed therefrom.

Referring to FIG. 2A, a tooling 200 is shown. In the example of FIGS. 2A-2D, tooling 200 includes various geometries that are configured to enable the construction and manufacture of a duct. This is merely an example, and other geometries, shapes, and configurations are enabled by various embodiments of the invention. The tooling 200 includes complex geometry that in traditional manufacturing processes is either difficult or impossible to achieve. Tooling 200 includes a lay-up surface 202 and a support surface 204. The lay-up surface 202 is the surface or surfaces of the tooling 200 that will have the fabrication materials applied thereto. Thus, the lay-up surface 202 forms a mold or support structure that forms the shell or framework for the final fabricated component or part. In the example of FIGS. 2A-2D, the lay-up surface 202 is the interior of the shape of the duct.

The support surface 204 is the interior or non-lay-up surfaces of the tooling 200. In some embodiments the support surface 204 may include support features 206 such as ribbing, egg-crating, etc. that may enable additional structural support to the tooling 200 and particularly to enable proper structural support to the fabrication materials and support the component or part during the curing process. Other features of the support surface 204 may include the ability to house or support external support structures and/or materials, such as sand, foam, etc.

Although the configuration of FIGS. 2A-2D is merely an example, it provides an illustration of the potential complex geometries enabled by embodiments of the invention. For example, tooling 200 includes legs 208 that have curved portions that curve inward toward the support surface 204. Further, the underside or lower side shown in FIG. 2B shows a shelf 210 where material may be laid-up on the lay-up surface 202. The tooling 200 also includes a neck 212 that extends upward in FIG. 2A. The neck 212 defines a curved or cylindrical surface 214 and an opening 216 at an end thereof. The opening 216 is defined by a cylindrical portion 218 of the tooling 200. The interior of the cylindrical portion 218 is part of the support surface 204 and the exterior of the cylindrical portion 218 is part of the lay-up surface 202. In some embodiments, the opening 216 may be filled or supported by a removable or external support, such as a foam insert or other feature.

The tooling 200 is formed and prepared as described above with respect to steps 102-110 of process 100 of FIG. 1. That is, the tooling 200 is additively manufactured and formed from appropriate tooling materials. Advantageously, as shown in FIGS. 2A and 2B, the tooling 200 forms a complete, unitary surface to which the fabrication material may be applied - thus forming a complete, unitary fabricated part or component.

For example, with reference to FIG. 2C, a side view of the tooling 200 with fabrication material 220 laid-up thereon is shown. The drawing in FIG. 2C shows a partial cross-section of the fabrication material 220, to show the lay-up on the tooling 200. As shown, the fabrication material 220 is laid-up to conform to the lay-up surfaces 202 of the tooling 200, and thus a unitary fabricated body or part can be formed. The tooling 200 and fabrication material 220 (as shown in FIG. 2C) is then cured to form the fabricated part, as described above. For example, the tooling 200 and fabrication material 220 (as shown in FIG. 2C) can be inserted into a vacuum bag. The vacuum bag can then compress or hold the fabrication material 220 against the lay-up surfaces 202 of the tooling 200 when the vacuum is formed. Subsequently, thermal treatment may be applied to cure the fabrication material 220 to form the fabricated part 222.

Referring now to FIG. 2D, the fabricated part 222 is shown. The fabricated part 222 is formed from the cured fabrication material 220. As shown in FIG. 2D, the tooling 200 is removed therefrom. The fabricated part 222 includes the complex geometries that were enabled by the additive manufacturing formation of the tooling 200. Specifically, legs 224 (formed about legs 208), shelf 226 (formed about shelf 210), neck 228 (formed about neck 212), and opening 230 (formed about opening 216 and cylindrical portion 218) are all formed within and part of a single, unitary fabricated part 222.

As discussed above, the tooling 200 may be broken down and recycled when the curing of the fabricated part 222 is complete. If an insert or similar external support structure or material is used, for example, in the opening 216, this will also be removed, and may be reused.

Advantageously, embodiments of the invention provide a reusable and reliable process for forming unitary, complex geometry tooling and thus fabrication of fabricated parts based thereon. Advantageously, in accordance with embodiments of the invention, the thermal cure profile of composites can be modified to allow for the use of lower performance tooling materials/fabrication materials to be used. Further, longer dwell times at low temperatures may be used due to the selection of fabrication materials. Moreover, step-up dwells may be used to allow part-laminate matrix crosslinking (i.e. epoxy matrix may require cures at 250 °F and above). In some embodiments, the fabrication materials may attain green strength during low temp dwell cycle to support bagging pressures as temperature increases for final composite matrix curing.

In some embodiments, the tooling material may not be required for support of the fabrication material throughout the entire cure cycle, i.e., the fabrication material may have green strength. Thus, advantageously, the tooling may be removed simply by configuring the tooling material to shrink or withdraw from the fabrication material once green strength of the fabrication material is achieved. In some embodiments, advantageously, the tooling material may be configured to melt or dissolve from the fabrication material, once green strength is achieved in the fabrication material. This may enable easy removal of the tooling and/or recycling of the materials thereof.

Further, advantageously, because the materials used to form the tooling may be recyclable, the processes disclosed herein may be repeatable and cost reductions are enabled. Specifically, because a highly complex part does not need to be formed from a permanent material, the process enables the production of complex parts at lower cost. That is, the tooling can be configured as one unitary item having complex geometry, the part material can be laid-up onto the tooling material and cured, and then the tooling material may recycled to form the same or a different geometry within a relatively short period of time. Moreover, because of the simplicity of designing and the manufacturing the tooling based on additive manufacturing techniques, multiple toolings of the same or different geometries may be formed within a relatively short period of time.

Furthermore, advantageously, lower overall cost of fabrication for composite parts is enabled by eliminating long lead items. Moreover, advantageously, part fabrication can occur using standard materials for the components and parts with the processes disclosed herein. Further, as noted, the tooling material is disposable. Furthermore, in some embodiments, the tooling material may be relatively cheap for both short run and long run items. Moreover, the tooling may be easily modified due to the additive manufacturing process. As such, tooling can be made "on-demand" for replacement parts at maintenance facilities, in the field, for specific construction of equipment, testing, etc. Furthermore, due to the materials that may be used as enabled by embodiments of the invention, lower temperatures are possible for the curing processes and thus an autoclave or other high temperature process may be eliminated in the manufacturing process, thus further reducing costs and time.

Accordingly, the invention is not to be seen as limited by the foregoing description, but is only limited by the scope of the appended claims.

## Claims

1. A method of manufacturing a fabricated part (222) having complex geometry, the method comprising:
generating a digital model of a tooling (200) having a complex geometry;
additively manufacturing a tooling (200) based on the digital model from tooling material;
laying-up fabrication materials (220) on the tooling (200);
curing the fabrication materials (220) on the tooling (200) to form a fabricated part (222); and
removing the tooling (200) from the fabricated part (222),
**characterized in that** the removing the tooling (200) from the fabricated part (222) further comprises breaking the tooling (200), and
**in that** the fabricated part (222) is an aircraft, oil rig, or vehicle part.

2. The method of claim 1, further comprising recycling the tooling material for reuse.

3. The method of any of the preceding claims, wherein the tooling includes one or more support features.

4. The method of any of the preceding claims, wherein the tooling materials are configured to maintain a rigid tooling structure during the curing process.

5. The method of any of the preceding claims, further comprising adjusting the curing process to optimize the process with respect to material properties of the fabrication materials (220).

6. The method of any of the preceding claims, wherein the curing comprises:
curing at a temperature of 200-225 °F (93.3 to 107.2°C) for six hours;
raising the temperature to 250 °F (121.1°C) for two hours; and
raising the temperature to 350 °F (176.7°C) for two hours.

7. The method of any of the preceding claims, wherein the tooling material is configured to maintain a rigid tooling structure during a first portion of the curing process and configured to lose the rigidity during a second portion of the curing process.

8. The method of any of the preceding claims, wherein the tooling material comprises a thermoplastic, metal, or composite.

9. The method of any of the preceding claims, wherein the tooling material comprises nylon, polyetherimide (PEI), SR-30 soluble support material, or terpolymers of methacrylic acid, styrene, or butylacrylate.

## Patentansprüche

1. Verfahren zum Herstellen eines gefertigten Teils (222), das eine komplexe Geometrie aufweist, wobei das Verfahren Folgendes umfasst:
Erzeugen eines digitalen Modells eines Werkzeugs (200), das eine komplexe Geometrie aufweist;
generatives Fertigen eines Werkzeugs (200) basierend auf dem digitalen Modell aus Werkzeugmaterial;
Schichten von Fertigungsmaterialien (220) auf das Werkzeug (200);
Härten der Fertigungsmaterialien (220) auf dem Werkzeug (200), um ein gefertigtes Teil (222) zu bilden; und
Entfernen des Werkzeugs (200) von dem gefertigten Teil (222),
**dadurch gekennzeichnet, dass** das Entfernen des Werkzeugs (200) von dem gefertigten Teil (222) ferner Brechen des Werkzeugs (200) umfasst und
dass das gefertigte Teil (222) ein Flugzeug-, Bohrinsel- oder Fahrzeugteil ist.

2. Verfahren nach Anspruch 1, ferner umfassend Recyceln des Werkzeugmaterials zur Wiederverwendung.

3. Verfahren nach einem der vorhergehenden Ansprüche, wobei das Werkzeug ein oder mehrere Stützmerkmale beinhaltet.

4. Verfahren nach einem der vorhergehenden Ansprüche, wobei die Werkzeugmaterialien dazu konfiguriert sind, während des Härtungsprozesses eine starre Werkzeugstruktur aufrechtzuerhalten.

5. Verfahren nach einem der vorhergehenden Ansprüche, ferner umfassend Anpassen des Härtungsprozesses, um den Prozess in Bezug auf Materialeigenschaften der Fertigungsmaterialien (220) zu optimieren.

6. Verfahren nach einem der vorhergehenden Ansprüche, wobei das Härten Folgendes umfasst:
Härten bei einer Temperatur von 200-225 °F (93,3 bis 107,2 °C) für sechs Stunden;
Erhöhen der Temperatur auf 250 °F (121,1 °C) für zwei Stunden; und
Erhöhen der Temperatur auf 350 °F (176,7 °C) für zwei Stunden.

7. Verfahren nach einem der vorhergehenden Ansprüche, wobei das Werkzeugmaterial dazu konfiguriert ist, während eines ersten Abschnitts des Härtungsprozesses eine starre Werkzeugstruktur aufrechtzuerhalten, und dazu konfiguriert ist, während eines zweiten Abschnitts des Härtungsprozesses die Starrheit zu verlieren.

8. Verfahren nach einem der vorhergehenden Ansprüche, wobei das Werkzeugmaterial einen Thermoplast, ein Metall oder einen Verbundstoff umfasst.

9. Verfahren nach einem der vorhergehenden Ansprüche, wobei das Werkzeugmaterial Nylon, Polyetherimid (PEI), lösliches SR-30-Stützmaterial oder Terpolymere von Methacrylsäure, Styrol oder Butylacrylat umfasst.

## Revendications

1. Procédé de fabrication d'une pièce fabriquée (222) ayant une géométrie complexe, le procédé comprenant :
la génération d'un modèle numérique d'un outillage (200) à géométrie complexe ;
la fabrication additive d'un outillage (200) sur la base du modèle numérique à partir d'un matériau d'outillage ;
le dépôt de matériaux de fabrication (220) sur l'outillage (200) ;
le durcissement des matériaux de fabrication (220) sur l'outillage (200) pour former une pièce fabriquée (222) ; et
le retrait de l'outillage (200) de la pièce fabriquée (222),
**caractérisé en ce que** le retrait de l'outillage (200) de la pièce fabriquée (222) comprend en outre la rupture de l'outillage (200), et
**en ce que** la pièce fabriquée (222) est une pièce d'aéronef, de plate-forme pétrolière ou de véhicule.

2. Procédé selon la revendication 1, comprenant en outre le recyclage du matériau d'outillage pour réutilisation.

3. Procédé selon l'une quelconque des revendications précédentes, dans lequel l'outillage comporte une ou plusieurs caractéristiques de support.

4. Procédé selon l'une quelconque des revendications précédentes, dans lequel les matériaux d'outillage sont conçus pour maintenir une structure d'outillage rigide pendant le processus de durcissement.

5. Procédé selon l'une quelconque des revendications précédentes, comprenant en outre l'ajustement du processus de durcissement pour optimiser le processus par rapport aux propriétés matérielles des matériaux de fabrication (220).

6. Procédé selon l'une quelconque des revendications précédentes, dans lequel le durcissement comprend :
le durcissement à une température de 200 à 225 °F (93,3 à 107,2 °C) pendant six heures ;
la hausse de la température à 250 °F (121,1 °C) pendant deux heures ; et
la hausse de la température à 350 °F (176,7 °C) pendant deux heures.

7. Procédé selon l'une quelconque des revendications précédentes, dans lequel le matériau d'outillage est conçu pour maintenir une structure d'outillage rigide pendant une première partie du processus de durcissement et conçu pour perdre la rigidité pendant une seconde partie du processus de durcissement.

8. Procédé selon l'une quelconque des revendications précédentes, dans lequel le matériau d'outillage comprend un thermoplastique, un métal ou un composite.

9. Procédé selon l'une quelconque des revendications précédentes, dans lequel le matériau d'outillage comprend du nylon, du polyétherimide (PEI), un matériau de support soluble SR-30 ou des terpolymères d'acide méthacrylique, de styrène ou d'acrylate de butyle.
